Europäisches Patentamt

European Patent Office

Office européen des brevets

(19)

(11) Publication number: **0 273 248**
**A2**

(12) **EUROPEAN PATENT APPLICATION**

(21) Application number: **87118155.8**

(51) Int. Cl.⁴: **G06F 3/023**

(22) Date of filing: **08.12.87**

(30) Priority: **22.12.86 US 944132**

(43) Date of publication of application:
**06.07.88 Bulletin 88/27**

(84) Designated Contracting States:
**DE FR GB IT**

(71) Applicant: **International Business Machines**
**Corporation**
**Old Orchard Road**
**Armonk, N.Y. 10504(US)**

(72) Inventor: **Hearing, Karen Kastner**
**12215 Cabana Lane**
**Austin Texas 78727(US)**
Inventor: **James, Wendy Sue**
**13113 Amarillo Avenue**
**Austin Texas 78729(US)**

(74) Representative: **Grant, Iain Murray**
**IBM United Kingdom Limited Intellectual**
**Property Department Hursley Park**
**Winchester Hampshire SO21 2JN(GB)**

(54) Machine/user conversation windowing.

(57) A processing system with a display and input user interface prompt the user through a sequence of computer program input procedures for the execution of a computer program. Each of the input procedures requires the user to designate input data. A first window including a prompt message to the user for the user to designate input data is displayed and, when the user designated input data is received from the input device it is added to the display and is used to select for display, a second window on a second portion of the display including a second prompt message to the user for the user to designate additional input data while continuing to display at least a portion of the first window illustrating the first prompt message and the designated input data, and so on. The user input data and window specifications are saved. If the user requests an undo function requiring the previously executed processing to back-track to a chosen existing window, all the windows back to the chosen window, together with the user input to that chosen window are removed from the display by regeneration from the saved data and the saved data relating to what has been removed only is reset, whereafter processing is resumed from that point.

FIG. 6C

## MACHINE/USER CONVERSATION WINDOWING

This invention relates to machine/user conversation windowing in computer/user interfaces where the user interfaces with a program via a display and a user data input, the display having portions devoted to user data.

The execution of most computer programs requires input data. Historically, computer programs required all input data at the time execution of the program was begun. More recent computer programs provide a continuous interaction with a user prompting the user for additional input data during the course of program execution.

Computer programs requiring prompted user inputs are traditionally executed on a computer system having a computer display terminal and including a keyboard to receive user input data. The user traditionally reads prompt messages on the terminal display and provides input data to the computer program through the terminal keyboard. In programs that require several different and independent responses from the user during execution, it is often difficult for the user to keep track of the previously provided input data since the input response to a previous prompt message is often not displayed when a new prompt message or input data prompt message is being displayed.

Windowing has been used recently to provide a computer program interface to the user. In windowing, only a portion of the display is used to communicate with the user. This window is normally overlaid on a previously existing display screen and when the user provides the input in response to the prompt message in the window, the window is removed allowing the user to view completely the previous display screen. Again, for programs that require several sequences of inputs through several sequences of windows, it is still difficult for the user to keep track of the input data previously provided.

The following is prior art that addresses windowing. US-A-3,716,842 entitled "System and Method for the Continuous Movement of a Sheet Having Graphic Subject Matter Thereon Through a Window of a Display Screen", addresses windowing displays for computer terminals. US-A-4,437,093 entitled "Apparatus and Method for Scrolling Text and Graphic Data in Selected Portions of a Graphic Display", discloses the use of scrolling of information on a window. US-A-4,574,364 entitled "Method and Apparatus for Controlling Image Display", illustrates an information management technique for displaying information in windows. US-A-4,598,384 entitled "Graphics Display with Improved Window Organization", discloses a display system including a driver program for displaying alphanumeric characters and graphics in a window.

Windowing is also disclosed in the IBM Technical Disclosure Bulletin, Vol. 29, No. 4, September, 1986 entitled "Method for Providing Message Help in a Personal Computer Windowing System". This article discloses the use of windows to provide "help" messages in a portion of a display that overlays a task display screen. IBM Technical Disclosure Bulletin, Vol. 28, No. 12, May, 1986, entitled "Hardware Display Windowing System" discloses a hardware implementation of a software windowing technique.

These prior art references while addressing windowing for user interfaces do not address the problem of maintaining a display of previously provided inputs by the user.

A training manual by Interleaf Inc for the IBM RT PC shows an effective 3-menu sequence with partial overlay, in which the user is required to provide an input to each menu but makes no mention of any provision for backtracking through the sequence to accommodate change of mind or correction of a previous error, though it is possible that the user may be able to clear the existing windows, one at a time, in reverse order, as it were, by hand. With a very limited potential menu string, this may be acceptable but, to accommodate longer strings, it is the object of the present invention to provide a windowing display interface that provides the user with the input data to be selected, a display history of previous inputs that have been previously selected and a practical means for a user to backtrack or undo previously selected inputs to redirect the execution of the program.

Hereinafter there is described a processing system which can execute a program that requires multiple user inputs. The program can be either a data processing or word processing program or any other program requiring multiple user inputs. The system includes a display and a device to receive user inputs. A user is prompted through a sequence of input procedures for the execution of the program where each procedure requires the user to designate an input. A first window or panel on a first portion of the display includes a first input prompt message for the user and the user designated input data received from the input device in response thereto is displayed the window. A selected second window is generated in response to the user's input on a second portion of the display and includes a second input prompt message for the user while at least a portion of the first window is retained wherein the first input prompt message is displayed at least partially with the designated input data indicated. The second designated input data is received and the process reiterates. It should be appreciated that the user while working in a current window still has at least a partial display of all previous windows and previously designated user inputs for the current task dialog and that each successive window remains on the display awaiting additional input information.

As described, each successively displayed window is displayed as an overlay on a portion of the previously displayed window while still maintaining the display of the input prompt message of the previously displayed window and the indication of the designated input. In appearance, these windows are displayed in a successively overlaying fashion across the screen in a single direction so that it is readily apparent to the user not only what the most current window is but also which was the first window and the successive order of the windows including all of the input prompt messages in each of the respective windows and the designated input for those respective windows. The selection of designated inputs by the user determines which of the next successive windows will be displayed and the input prompt messages can include a list of possible inputs for the user to select or a prompt message requesting the user to input an alphanumeric data sequence. The display of designated input data would include the list of possible inputs with the designated input indicated or the prompt message with its corresponding alphanumeric data sequence from the user displayed.

With this information available, what is termed an "undo" function is possible. The undo function responds to an 'undo' user input that designates one of the previously displayed windows which the user selects. Upon the commencement of the undo function by the user, all of the windows displayed successively from the designated previously displayed window are removed from the display. Additionally, the previously designated input for that now present display is removed, leaving the input prompt message for that window. The execution of the program is then reinitiated at the designated point of the input sequence for further execution. The advantages of this undo function are apparent to those skilled in the art in that they allow the user, by a single simple entry, to back out through previously executed portions of the program to readily make corrections in the earlier stages of input designation to redirect program execution.

The present invention will be described further by way of example with reference to an embodiment of the invention as illustrated in the accompanying drawings in which:

Figure 1A is a block diagram of a processor configuration;

Figure 1B is a sample base window display including information for the user;

Figure 2 illustrates the display of 1B including a second window;

Figure 3 illustrates the display of Figure 2 including a third window;

Figure 4 illustrates the display of Figure 3 including a fourth window;

Figure 5 illustrates the display of Figure 4 including a fifth window; and

Figures 6A, 6B, 6C and 6D are collectively a flow chart of the windowing and 'undoing' operations.

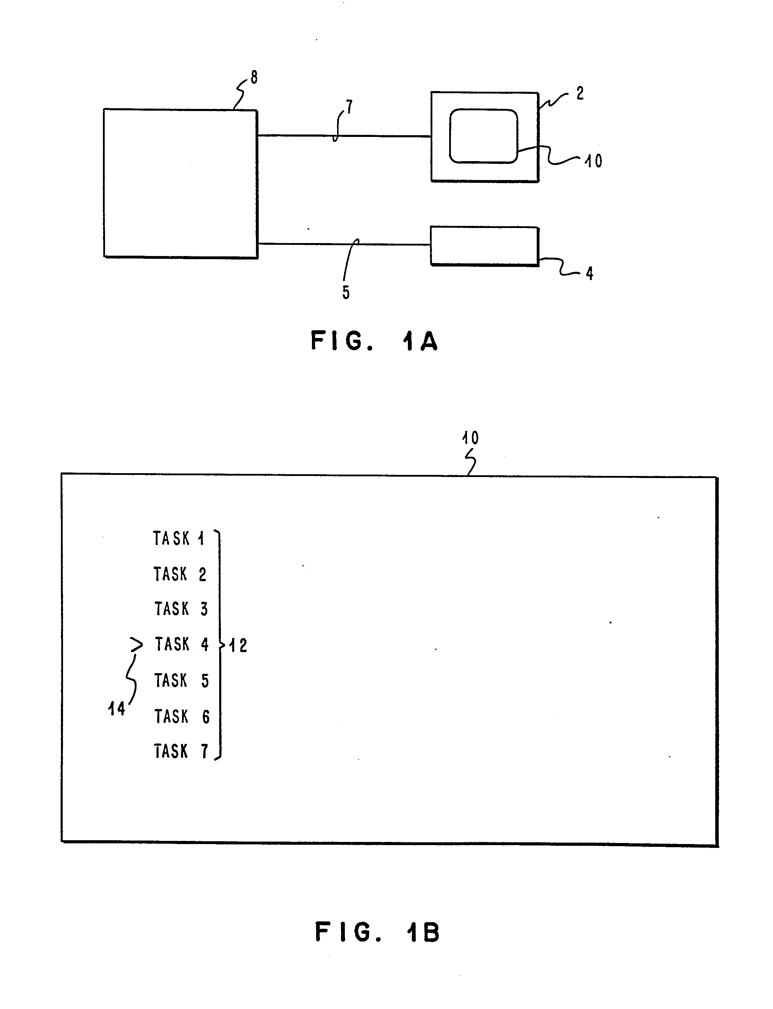

In Figure 1A, a processor configuration is shown that includes a computer processor 8 connected via line 7 to a display terminal 2 including a display screen 10. The processor 8 also includes a user input device 4 connected via line 5. Traditionally, this user input device 4 is a keyboard, however, it could conceivably be any type of input device such as a mouse or digitiser pad. The processor 8 includes a program that requires successive user inputs. This program might be any word processor or data processing program or any other program that requires a multiple succession of user inputs. The user is prompted for these inputs by display of prompt messages on the screen 10. One such user prompt message is illustrated in Figure 1B.

In Figure 1B, the display screen 10 includes a list of tasks 12 in a base window. In Figure 1B, "Task 4" has been selected as indicated by the indicator 14. In this example, the program that is being executed in computer 8 is a data base program. However, it is important to understand that any program requiring a succession of user inputs would be appropriate for use with the present invention.

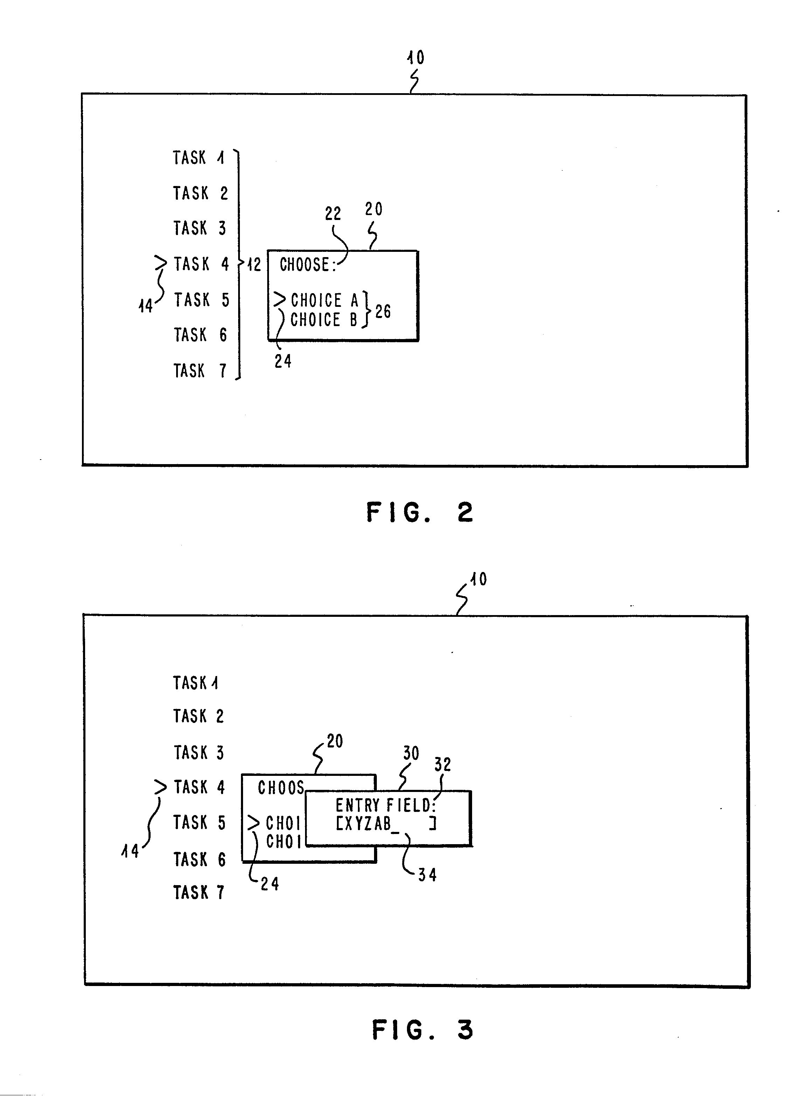

In Figure 2, after the selection of "Task 4" in the list of tasks 12, a second window 20 is shown adjacent to the information in the base window or first window in screen 10. In the second window 20, a list of possible inputs 26 are displayed with a user prompt message 22. Indicator 24 illustrates the designated user selection.

Figure 3 illustrates the display of Figure 2 including a third window 30 overlaying the second window 20. The third window 30 includes a user prompt message 32 and an input field 34 that will display the user input to be input from a keyboard. Window 30 illustrates a second type of input designation, that of an alphanumeric data sequence. Such designations would be used when the program requires titles, names or other alphanumeric designations.

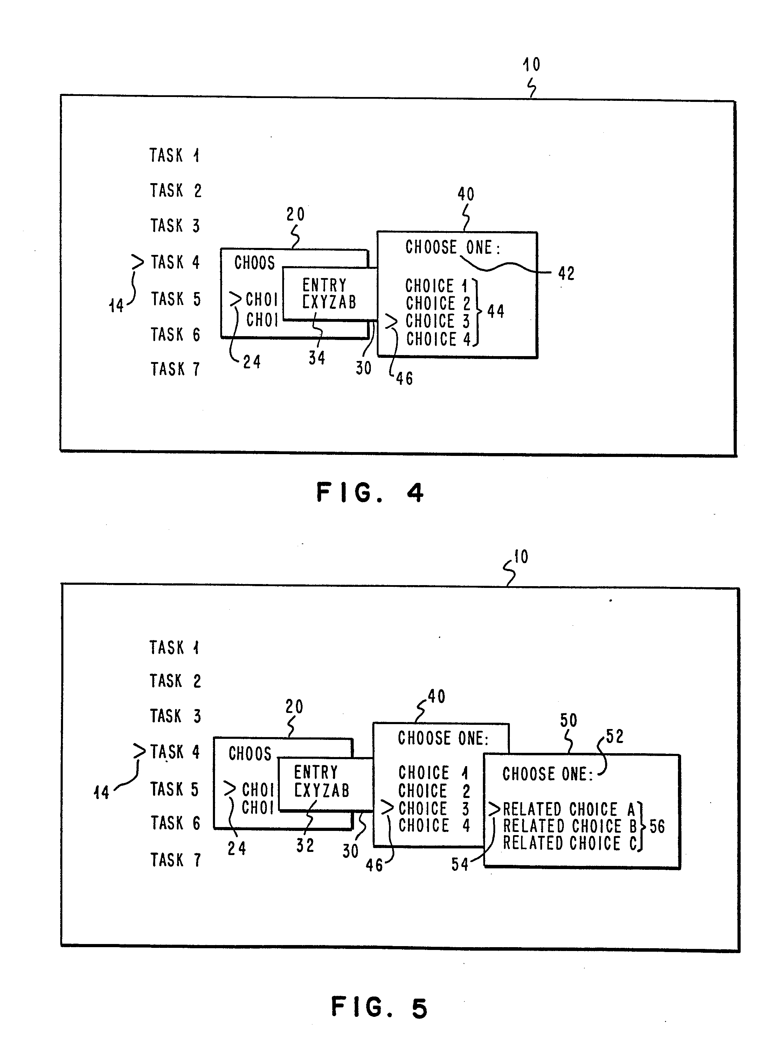

Figure 4 illustrates the screen 10 with a fourth window 40 overlaying the third window 30 and illustrating a prompt message 42 with possible inputs 44 and the selected input designated by indicator 46.

Figure 5 also includes a fifth window 50 overlaying the fourth window 40 together with the user prompt message 52, input selections 56 and the designated input indicator 54.

It should be apparent to one skilled in the art that the use of this windowing technique overlaying successive windows across the display screen 10 provides the user with the current prompt message and possible inputs together with the previous windows containing the previous inputs with the designated input indicated resulting in a visual history of the program execution sequence.

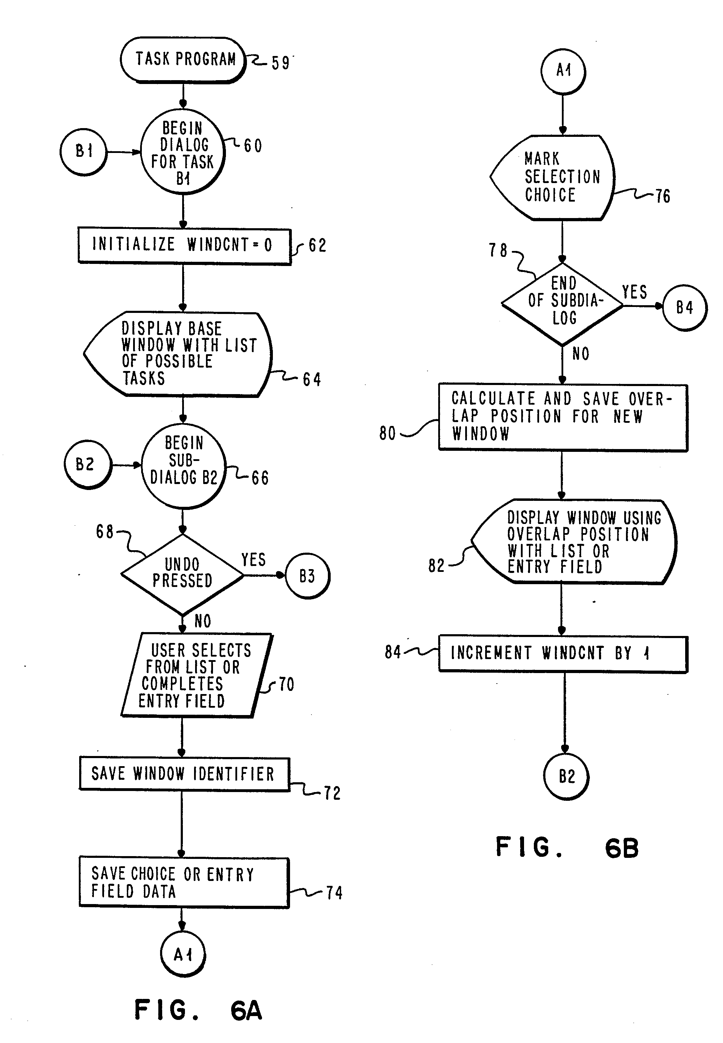

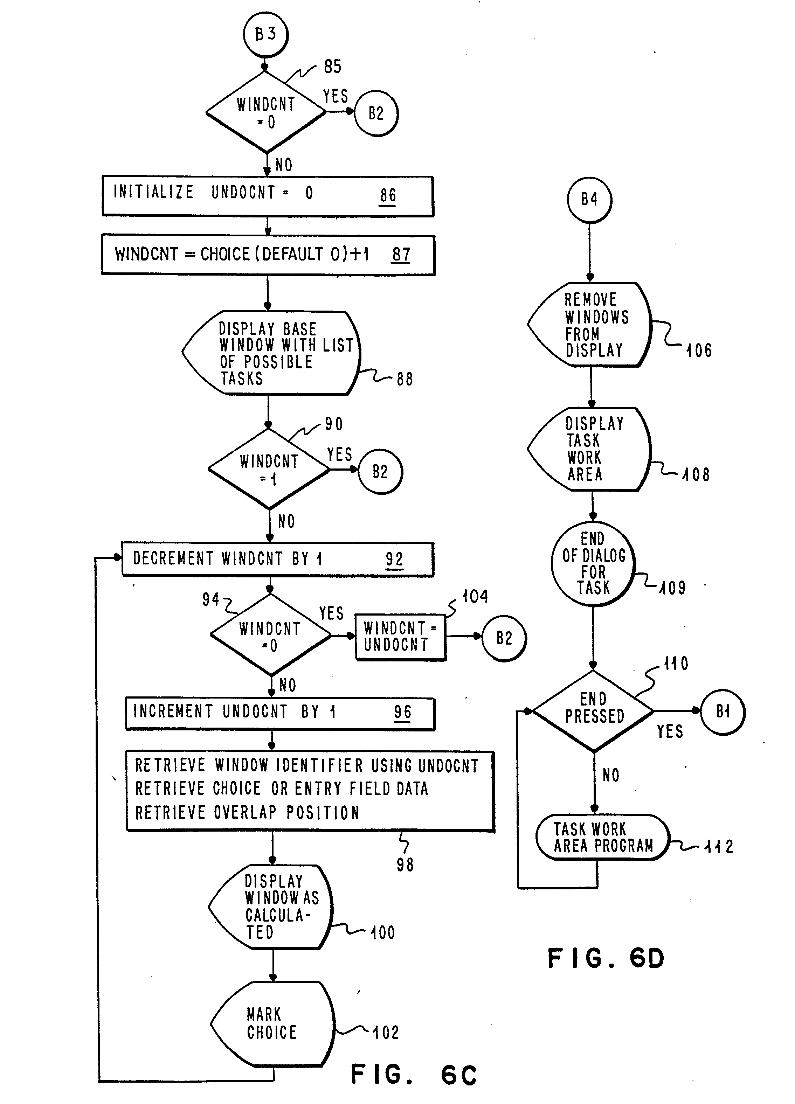

Figures 6A, 6B, 6C and 6D illustrate the sequences of operations and interlinks to implement this user interface. Referring to Figure 6A, the windowing begins from a task program 59 to start at step 60 by initialising a window counter (WINDCNT) in step 62. The display of the base window with a list of possible tasks is included in 64. These tasks correspond to the task list 12 in Figure 1B. Step 66 begins the successive windowing program. Step 68 determines if an undo has been requested. This will be explained in more detail later. If an undo has not been detected in step 68, the sequence proceeds to step 70 which receives the user selected task choice from the list of tasks 12 in Figure 1B. After step 70, the sequence proceeds to step 72 which saves the window identifier in memory. Proceeding to step 74, the designated input from the user is received and saved in memory. In step 76 (Figure 6B), the designated choice of the task list 12 is indicated by an indicator 14 (Figure 1B). The sequence then proceeds to step 78 to determine if that is the end of the sub-dialog or current windowing sequence loop. If so, the sequence branches to step 106 to be discussed later.

If the sub-dialog is to be continued, the program proceeds to step 80 wherein the overlap and position of the next window is calculated. It should be apparent to those skilled in the art that the selection of the next window is a function of the input data that has been designated and by the execution program using that input data. The sequence then continues to step 82 which displays this next window with its list of inputs. An example would be, in Figure 2, the display of window 20. The window counter is then incremented in step 84 and the sequence returns to step 66 to re-initiate the sub-dialog loop. This loop of steps 66, 68, 70, 72, 74, 76, 78, 80, 82, and 84 continues until it is determined by the program that no further windows are to be displayed. This decision is indicated in step 78 which would then branch to step 106 to remove all of the previously displayed windows from the screen 10. The sequence would proceed to step 108 to display the task work area to perform the task. Proceeding through step 109, the dialog of the task is ended and the program proceeds to step 110 to determine if the execution of the task is complete. If so, the task is complete and the sequence proceeds to step 60 which reinitialises the windowing display process. If not, the task function 112 proceeds and another user interface dialog within the task could be initiated.

One unique feature of the described arrangement is the ability provided to the user to back out of some or all of the execution of the program. This is made possible by the undo function and the manner of retaining window data. In step 68, if an undo function key, if that be the way of initiating the undo function, has been pressed, the sequence branches to step 85 (Figure 6C) wherein if it is discovered in step 85 that the window counter is set to zero, indicating that only the base window is displayed, the sequence branches back to the sub-dialog step 66. Otherwise, the sequence passes to step 86, wherein the undo counter is initialised, WINDCNT is set to the number of the window to which the user wishes to backtrack plus one, the display base window being, in this example, window 1, the default condition in absence of any indication to the contrary. and thence to step 88 wherein the base window is displayed with its list of potential inputs. In step 90, the window counter is tested to see if it is one indicating only the base window was displayed. If so, the sequence returns to step 66. If not, the sequence proceeds to step 92 where the window counter is decremented by 1. In step 94, the window counter is tested to see if it is equal to zero. If so, the window counter is set equal to the undo counter in step 104 and the sequence again branches to step 66. If not, the sequence proceeds to step 96 wherein the undo counter is incremented by 1. Proceeding to step 98, wherein the window identifier is retrieved, using the undo counter instead of the window counter. The user designated input or the entry field designated by the user is also retrieved. The overlap position of the window is retrieved.

Proceeding to step 100, the previously displayed window is now displayed in total. In step 102, the input from the user is marked. The sequence then returns to step 92 to determine and display additional windows for redisplay. In reference to the figures, an example of an undo operation would be a display transition from Figure 5 to Figure 4 where window 50 would be removed allowing the user to provide a new input to window 40.

It is assumed, though not explicitly stated, that the branch from step 66 to step 85, included the resetting of the undo button or the register or latch recording that the undo button has been pressed.

or whatever. It should be appreciated that the undo function is made possible by the saving and the displaying of the previous windows together with the display of previous designated input data.

Although this invention has been described with reference to one specific embodiment thereof, various modifications thereto will become apparent to those persons skilled in the art.

chosen window are regenerated, at the data level, in the order in which they were originally generated, using the saved data relating thereto.

## Claims

1. A processing system arranged to execute a program requiring multiple user inputs and including a display and a means for receiving user inputs, wherein a user is prompted through a sequence of input procedures for the execution of the program, each procedure requiring the user to designate or provide an input, by successively displaying windows across the display each window containing a prompt message for input data to be designated by the user and the previous user designated input in each previously displayed window; characterised in that the system is arranged to

a) save the input data and window position for each window generated;

b) receive a predetermined user input designating a change to be made to a previously designated input for an indicated previously displayed window;

(c) remove the last displayed windows from the display, back to and including the chosen window and to restore and display the user designated previously displayed window with its prompt message for input data to the user, but not that data; and

(d) upon receiving the user designated input newly requested by that restored previously chosen window, resume processing and window generation by displaying the user designated input for that previously chosen window.

2. A system as claimed in Claim 2 wherein each successive window is displayed overlapping a portion of the previously displayed window while maintaining displayed the designated input for that previous window and all previously designated inputs for all previously displayed windows.

3. A system as claimed in Claim 2, wherein the successively displayed windows are overlayed on the previously displayed windows in successive progression in a single direction across the display.

4. A system as claimed in any preceding Claim, wherein the successively displayed window is selected based upon the previously designated or provided user input.

5. A system as claimed in any preceding Claim, wherein the windows preceding the chosen window and the required remaining part of the

## FIG. 1A

## FIG. 1B

10

TASK 1
TASK 2
TASK 3
> TASK 4  12
14  TASK 5
TASK 6
TASK 7

22  20

CHOOSE:

> CHOICE A  26
CHOICE B

24

**FIG. 2**

10

TASK 1
TASK 2
TASK 3
> TASK 4
14  TASK 5
TASK 6
TASK 7

20

CHOOS

> CHOI
CHOI

24

30  32

ENTRY FIELD:
[XYZAB_    ]

34

**FIG. 3**

10

TASK 1

TASK 2

TASK 3                                           40

> TASK 4        CHOOS                    CHOOSE ONE:
14                                                            42
   TASK 5     > CHOI    ENTRY           CHOICE 1
                CHOI    [XYZAB          CHOICE 2    44
   TASK 6                               CHOICE 3
                                        CHOICE 4
   TASK 7        24      34      30
                                    46

**F I G.  4**

10

TASK 1

TASK 2

TASK 3                           40

> TASK 4     CHOOS              CHOOSE ONE:           50        52
14                                                        
   TASK 5   > CHOI   ENTRY        CHOICE  1       CHOOSE ONE:
             CHOI    [XYZAB       CHOICE  2
   TASK 6                       > CHOICE  3     > RELATED CHOICE A
                                 CHOICE  4       RELATED CHOICE B   56
   TASK 7      24      32    30                   RELATED CHOICE C
                                    46      54

**F I G.  5**

TASK PROGRAM ~ 59

B1 → BEGIN DIALOG FOR TASK B1 ~ 60

INITIALIZE WINDCNT = 0 ~ 62

DISPLAY BASE WINDOW WITH LIST OF POSSIBLE TASKS ~ 64

B2 → BEGIN SUB-DIALOG B2 ~ 66

68 ~ UNDO PRESSED — YES → B3

NO

USER SELECTS FROM LIST OR COMPLETES ENTRY FIELD ~ 70

SAVE WINDOW IDENTIFIER ~ 72

SAVE CHOICE OR ENTRY FIELD DATA ~ 74

A1

**FIG. 6A**

A1

MARK SELECTION CHOICE ~ 76

78 ~ END OF SUBDIA-LOG — YES → B4

NO

CALCULATE AND SAVE OVER-LAP POSITION FOR NEW WINDOW — 80

DISPLAY WINDOW USING OVERLAP POSITION WITH LIST OR ENTRY FIELD — 82

84 ~ INCREMENT WINDCNT BY 1

B2

**FIG. 6B**

B3

WINDCNT = 0 — 85

YES → B2

NO

INITIALIZE UNDOCNT = 0    86

WINDCNT = CHOICE (DEFAULT 0) +1    87

DISPLAY BASE WINDOW WITH LIST OF POSSIBLE TASKS — 88

WINDCNT = 1 — 90

YES → B2

NO

DECREMENT WINDCNT BY 1    92

WINDCNT = 0 — 94

YES → WINDCNT = UNDOCNT — 104 → B2

NO

INCREMENT UNDOCNT BY 1    96

RETRIEVE WINDOW IDENTIFIER USING UNDOCNT
RETRIEVE CHOICE OR ENTRY FIELD DATA
RETRIEVE OVERLAP POSITION
98

DISPLAY WINDOW AS CALCULA-TED — 100

MARK CHOICE — 102

FIG. 6C

B4

REMOVE WINDOWS FROM DISPLAY — 106

DISPLAY TASK WORK AREA — 108

END OF DIALOG FOR TASK — 109

END PRESSED — 110

YES → B1

NO

TASK WORK AREA PROGRAM — 112

FIG. 6D